Europäisches Patentamt

European Patent Office

Office européen des brevets

(11) Numéro de publication: **0 052 044**
**A1**

## (12) DEMANDE DE BREVET EUROPEEN

(21) Numéro de dépôt: **81401695.2**

(22) Date de dépôt: **26.10.81**

(51) Int. Cl.³: **B 63 B 21/08**, F 16 G 11/10

(30) Priorité: **07.11.80 FR 8023820**

(43) Date de publication de la demande: **19.05.82**
**Bulletin 82/20**

(84) Etats contractants désignés: **DE GB NL SE**

(71) Demandeur: **Treu, Henri, LPA Brommet Weesperzijde 68, NL-1091 EH Amsterdam (NL)**

(72) Inventeur: **Treu, Henri, LPA Brommet Weesperzijde 68, NL-1091 EH Amsterdam (NL)**

(74) Mandataire: **Bloch, Robert et al, 39 avenue de Friedland, F-75008 Paris (FR)**

(54) **Bloqueur de cordage.**

㊗ Bloqueur de corde, ou de cordage, notamment d'écoutes ou de drisses de voile d'un voilier, comprenant un étrier-support (1) comportant une base (2), pourvue d'une surface de blocage de la corde (30) et, montés sur le support, un levier de blocage (9) et un patin (16) pourvu d'une surface de blocage de la corde.

Le levier de blocage (4) est monté mobile en translation et en pivotement, il est prévu sur le support des moyens de butée (10, 19, 20) du levier, et le patin (16) et le levier (9) sont agencés pour que le déplacement de la corde entre la base (2) de blocage et le patin (16) de blocage entraîne le levier en déplacement jusqu'à ce qu'il vienne en butée contre lesdits moyens (10, 19, 20), pour bloquer alors la corde entre la base et le patin.

Bloqueur de cordage.

La présente invention concerne un bloqueur de corde, ou de cordage, notamment d'écoutes ou de drisses de voile d'un voilier.

On se sert depuis longtemps de tels bloqueurs pour maintenir une écoute sous tension après l'avoir raidie par des moyens appropriés.

On a commencé par utiliser à cet effet des bloqueurs comprenant un galet cylindrique de verrouillage, pourvu d'une surface de blocage, monté rotatif autour d'un axe excentré porté par deux flasques verticaux d'un étrier en forme de U, ce galet étant disposé pour coopérer avec la base horizontale de l'étrier, pourvue d'une surface de blocage, et bloquer ainsi entre eux le cordage.

Puis on a perfectionné ces bloqueurs pour en proposer d'autres, comprenant toujours un étrier en forme de U, avec deux flasques verticaux et une base horizontale de blocage, et un galet de verrouillage cylindrique, monté rotatif autour d'un axe excentré porté par les deux flasques de l'étrier. Ces derniers bloqueurs comportent, en outre, un levier, monté pivotant autour d'un axe porté par les flasques et un patin, pourvu d'une surface de blocage (le galet de verrouillage n'en comporte plus), monté pivotant, contre l'action d'un ressort, à l'extrémité du levier. Ce levier, après la rotation du galet de verrouillage, est maintenu en position abaissée, dans laquelle le patin et la base de blocage coopèrent pour bloquer entre eux le cordage.

Les premiers bloqueurs présentent l'inconvénient de rendre impossible la libération instantanée du cordage, sans reprendre la tension sur les moyens de raidissage.

Les deuxièmes bloqueurs ne présentent pas cet inconvénient,

0052044

le déblocage instantané étant possible en agissant sur le galet de verrouillage excentrique.

Leur montage est cependant compliqué avec trois éléments en mouvement, et il est obligatoire de prévoir une retenue par ressort sur le patin de blocage.

La présente invention vise donc à pallier les inconvénients des deux bloqueurs ci-dessus.

A cet effet, elle concerne un bloqueur de corde, comprenant un support comportant une base, pourvue d'une surface de blocage de la corde, et montés sur le support, un levier de blocage et un patin pourvu d'une surface de blocage de la corde, caractérisé par le fait que le levier est monté mobile en translation et en pivotement, il est prévu sur le support des moyens de butée du levier, et le patin et le levier sont agencés pour que le déplacement de la corde entre la base de blocage et le patin de blocage entraîne le levier en déplacement jusqu'à ce qu'il vienne en butée contre les dits moyens, pour bloquer alors la corde entre la base et le patin.

Grâce à l'invention, dans une position verticale normale, le poids et le mouvement de la corde entraînent le blocage du levier bloqueur. Il s'agit en quelque sorte d'un auto-blocage de la corde. Et dans ces conditions, un déplacement de la corde, dans le sens opposé au sens de blocage, provoque le déblocage de la corde.

Dans une forme de réalisation préférée du bloqueur de l'invention, lesdits moyens de butée comprennent un galet monté rotatif autour d'un axe excentré porté par le support. Dans ce cas, un des moyens de butée est donc effaçable. Cette forme de réalisation, pourvue d'un galet rotatif à axe excentré, permet donc les fonctions suivantes :
a) avec galet excentrique bloqué vers le bas : le cordage se bloque en mouvement dans un sens, mais le mouvement dans l'autre sens, par exemple pour reprendre la tension du cordage,

- 3 -

0052044

reste possible ;

b) en cas de déblocage instantané sous tension, il suffit de monter le galet excentrique vers le haut ; dans ce cas, le mouvement du cordage est libre aussi bien dans un sens que dans l'autre.

On notera également qu'il est intéressant que le levier et le patin de blocage du bloqueur de l'invention soient solidaires l'un de l'autre, et de préférence monobloc. Dans ce cas, le nombre de pièces du bloqueur de l'invention se limite au minimum.

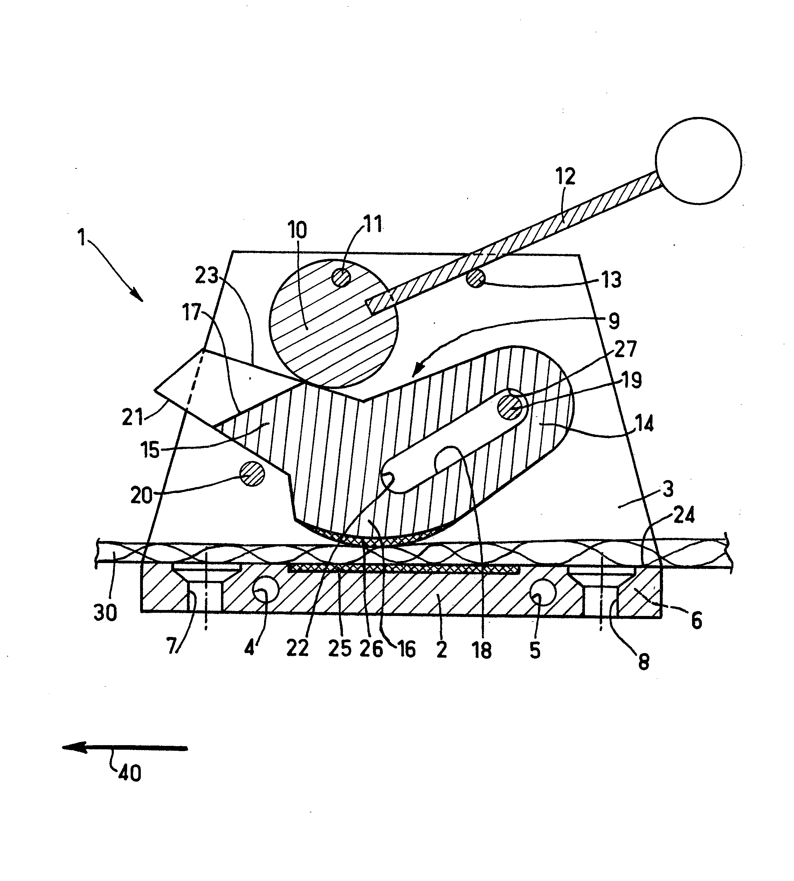

L'invention sera mieux comprise à l'aide de la description suivante d'une forme de réalisation préférée du bloqueur de l'invention, en référence à la figure unique annexée, qui représente une vue en coupe médiane du bloqueur de l'invention.

Le bloqueur représenté sur la figure comporte un étrier-support 1, comprenant une base 2 et deux flasques 3, disposés perpendiculairement à la base et fixés à celle-ci, sur ses faces latérales 6, par deux boulons et deux écrous chassés respectivement à travers des trous 4 et 5 percés dans ces trois pièces.

L'étrier 1 a donc une forme de U. Il peut être fixé, par sa base 2, par exemple sur le pont d'un bateau, au moyen notamment de deux écrous pouvant être chassés à travers deux trous 7 et 8 percés dans la base 2.

Un levier de blocage 9 est monté relativement librement, comme on le verra ci-après, entre les deux flasques 3. Entre ceux-ci est également disposé un galet cylindrique 10, monté rotatif, autour d'un axe 11 excentré, sous l'action d'une tige de manoeuvre 12 fixée au galet 10. Un axe 13, porté par les flasques 3, sert notamment de butée à la tige 12 pour limiter la rotation du galet 10, dans le sens des aiguilles d'une montre sur la figure.

Le levier 9, monobloc dans l'exemple représenté, comporte

- 4 -                          0052044

trois parties. Une première partie 14, qu'on peut appeler bras translatif et rotatif, une deuxième partie 15, qu'on peut appeler bras de butée, prolongeant le bras 14, et une troisième partie inférieure 16, proche de la base 2 de l'étrier-support 1, jouant le rôle d'un patin de blocage.

Notons tout de suite que le bras 15 du levier 9 comporte, dans l'exemple représenté, une gorge 17 pour le passage et la réception de la tige de manoeuvre 12, dans la position du levier 9 représentée sur la figure, en fin de rotation de cette tige dans le sens inverse des aiguilles d'une montre.

A travers le bras 14 du levier 9 est percée une rainure rectiligne 18 s'étendant sensiblement sur toute la longueur de ce bras. Un axe 19, porté par les flasques 3 de l'étrier 1, s'étend, avec jeu, à travers cette rainure 18. Le bras 14, et donc l'ensemble de l'étrier 1, pourrait, en l'absence des autres aménagements du bloqueur qui vont être décrits plus loin, être librement suspendu à l'axe 19, pour se déplacer en translation parallèlement à lui-même et en rotation autour de cet axe 19. Toutefois, un axe 20, porté par les flasques 3, est disposé pour coopérer avec la face inférieure 21 du bras 15 du levier 9 et limiter ainsi, en l'absence de la corde à bloquer, la rotation du levier dans le sens inverse des aiguilles d'une montre, ce qui, comme on le verra, facilite grandement l'introduction de la corde dans le bloqueur. Les axes 19 et 20 sont d'ailleurs disposés l'un par rapport à l'autre pour que, toujours en l'absence de corde, la face inférieure 21 du bras 15 porte encore sur l'axe 20 lorsque le fond 22 de la rainure 18 du bras 14 est en butée sur l'axe 19. En outre, le diamètre du galet 10, la position de l'axe excentré 11, celle de l'axe 19 et les dimensions du bras 15 du levier 9 sont tels que la rotation dans le sens des aiguilles d'une montre du levier 9 autour de l'axe 19, quelle que soit la place relative de l'axe 19 dans la rainure 18 du bras 14, soit limitée par la partie inférieure du galet 10 servant de butée à la face supérieure 23 du bras 14.

Enfin, la partie centrale de la surface supérieure 24 de la base 2, ainsi que la partie inférieure du patin 16 du levier 9 comportent chacune une surface anti-dérapante 25, 26, respectivement, agencée pour coopérer avec une corde dont il va être question plus loin. On notera que les axes 19 et 20 sont disposés dans des plans situés de part et d'autre du plan vertical, c'est-à-dire perpendiculaire au plan de la base 2, passant par l'axe excentré 11, et que les axes 11 et 19 sont eux-mêmes situés de part et d'autre du plan vertical, du reste mobile, passant par la zone du patin 16 la plus proche de la base 2. Dans l'exemple représenté, les axes 11, 13, 19 et 20 sont parallèles et perpendiculaires aux flasques 3.

Le bloqueur représenté ayant été décrit, on peut maintenant aborder son fonctionnement et la manière dont une corde 30 est bloquée dans ce bloqueur.

Deux solutions sont possibles.

La première consiste à effacer ou sortir le galet 10, en faisant pivoter la tige 12 dans le sens inverse des aiguilles d'une montre, à déplacer le levier 9 vers la gauche sur la figure, ou bien à le laisser aller dans ce sens sous son propre poids, pour que le fond 27 de sa rainure 18 vienne en butée sur l'axe 19, à faire passer la corde 30 entre le patin 16 et la base 2, depuis le bord gauche du bloqueur le plus proche de l'axe 20, ce qui est très facile grâce précisément à cet axe 20, ce qui fait déplacer le levier 9 le long et autour de l'axe 19 dans le sens inverse des aiguilles d'une montre, à faire à nouveau pivoter la tige 12 mais dans le sens des aiguilles d'une montre, ce qui fait tourner le galet 10 et abaisse sa partie inférieure, et à laisser la corde parfaire son blocage sous l'action de sa tension s'exerçant dans le sens de la flèche 40, vers la gauche sur la figure, ce qui vient faire pivoter le levier 9 dans le sens des aiguilles d'une montre pour entraîner le patin 16 contre la corde 30, ainsi pressée entre le patin 16 et la base 2.

En effet, la coopération de la corde 30 avec la surface striée 26 du patin 16 entraîne le levier 19 dans un mouvement de translation sur lui-même, doublé d'un mouvement de rotation dans le sens des aiguilles d'une montre autour de l'axe 19, c'est-à-dire dans un mouvement de rotation autour d'un axe fictif extérieur au bloqueur.

Lorsque le bras 15 vient en butée contre le galet 10 ou, au-delà, lorsque le fond 27 de la rainure 18 vient en butée contre l'axe 19, le bras 15 étant toujours en butée contre le galet 10, le levier 9 ne peut plus bouger et la corde 30 est parfaitement coincée entre le patin 16 et la base 2. On notera que le fait que le levier 9 soit finalement monté pivotant autour d'un axe éloigné, extérieur au bloqueur, augmente la force de blocage de la corde. Il suffit de tirer la corde vers la droite sur la figure, pour faire pivoter dans l'autre sens le levier 9 et soulever ainsi le patin 16, pour débloquer la corde et, par exemple, l'entraîner davantage vers la droite sur la figure pour, après l'avoir à nouveau relâchée, que sa tension provoque son blocage.

Dans la deuxième solution, très similaire à la première mais beaucoup plus pratique, on opère comme dans le premier cas, mais on abaisse la tige 12 sur la butée 13 avant d'introduire la corde 30 dans le bloqueur. Et c'est bien entendu cette solution qui est à préconiser puisque, sans toucher à l'une ou l'autre des deux pièces du bloqueur, il suffit d'introduire la corde pour qu'elle se bloque ensuite suivant le sens opposé au sens d'introduction et de tirer dans le sens d'introduction pour la débloquer.

Le bloqueur de l'invention est particulièrement bien adapté pour raidir les écoutes et drisses de voile. Bien entendu, on peut disposer plusieurs bloqueurs du type décrit ci-dessus les uns à côté des autres.

0052044

REVENDICATIONS

1. Bloqueur de corde, comprenant un support comportant une base, pourvue d'une surface de blocage de la corde et, montés sur le support, un levier de blocage et un patin pourvu d'une surface de blocage de la corde, caractérisé par le fait que le levier est monté mobile en translation et en pivotement, il est prévu sur le support des moyens de butée du levier, et le patin et le levier sont agencés pour que le déplacement de la corde entre la base de blocage et le patin de blocage entraîne le levier en déplacement jusqu'à ce qu'il vienne en butée contre les dits moyens, pour bloquer alors la corde entre la base et le patin.

2. Bloqueur selon la revendication 1, dans lequel les moyens de butée sont effaçables.

3. Bloqueur selon la revendication 2, dans lequel les dits moyens de butée comprennent un galet monté rotatif autour d'un axe excentré porté par le support.

4. Bloqueur selon la revendication 1, dans lequel le levier de blocage comporte un bras percé d'une rainure rectiligne, et un axe, porté par le support, s'étend à travers cette rainure.

5. Bloqueur selon la revendication 4, dans lequel le bras percé de la rainure est prolongé par un autre bras agencé pour coopérer avec les dits moyens de butée.

6. Bloqueur selon la revendication 5, dans lequel le dit autre bras est agencé pour coopérer également avec d'autres moyens de butée.

7. Bloqueur selon la revendication 6, dans lequel les dits autres moyens de butée sont constitués par un axe.

8. Bloqueur selon la revendication 7, dans lequel l'axe s'étendant à travers la rainure du levier de blocage et l'axe
de butée du dit autre bras du levier sont respectivement disposés dans deux plans situés de part et d'autre du plan perpendiculaire à la base du support et passant par l'axe excentré du galet.

9. Bloqueur selon l'une des revendications 4 à 8, dans lequel
l'axe s'étendant à travers la rainure du levier de blocage et
l'axe excentré du galet sont respectivement disposés dans
deux plans situés de part et d'autre du plan perpendiculaire
à la base du support et passant par la zone du patin la plus
proche de la base.

10. Bloqueur selon l'une des revendications 1 à 9, dans lequel
le patin et le levier sont formés d'une seule pièce.

0052044

## DOCUMENTS CONSIDERES COMME PERTINENTS

| Catégorie | Citation du document avec indication, en cas de besoin, des parties pertinentes | Revendication concernée |
|---|---|---|
| X | <u>FR - A - 1 338 789</u> (TISSERAND)<br>* En entier *<br><br>-- | 1,2,3 |
| X | <u>GB - A - 521 751</u> (DIMMOCK)<br>* Page 5, lignes 25-108; figures 4,5 *<br><br>-- | 1,2,4 |
| A | <u>EP - A - 0 012 126</u> (HALL)<br>* En entier *<br><br>-- | 1,2,3<br>5 |
| A | <u>US - A - 3 222 742</u> (PERSIAUX) | |
| A | <u>DE - A - 2 114 569</u> (KLEPPER) | |
| A | <u>US - A - 1 710 697</u> (GILBERT) | |
| A | <u>US - A - 2 597 626</u> (EDER)<br><br>---- | |

**CLASSEMENT DE LA DEMANDE (Int. Cl. ³)**

B 63 B 21/08
F 16 G 11/10

**DOMAINES TECHNIQUES RECHERCHES (Int. Cl. ³)**

B 63 B
F 16 G

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 10-02-1982 | DE SCHEPPER |

OEB Form 1503.1 06.78